Europäisches Patentamt

European Patent Office

Office européen des brevets

(11) Publication number: **0 318 489 B1**

# EUROPEAN PATENT SPECIFICATION

(45) Date of publication of patent specification: **14.10.92**

(51) Int. Cl.⁵: **C04B 35/02**, C04B 35/04, C04B 35/10, C04B 35/18, C04B 35/56, C04B 35/58

(21) Application number: **87905160.5**

(22) Date of filing: **14.08.87**

(86) International application number:
**PCT/AU87/00263**

(87) International publication number:
**WO 88/01258 (25.02.88 88/05)**

(54) **COMPOSITE REFRACTORY MATERIALS.**

(30) Priority: **19.08.86 AU 7543/86**

(43) Date of publication of application:
**07.06.89 Bulletin 89/23**

(45) Publication of the grant of the patent:
**14.10.92 Bulletin 92/42**

(84) Designated Contracting States:
**AT BE CH DE FR GB IT LI LU NL SE**

(56) References cited:
| | |
|---|---|
| **EP-A- 204 327** | **CH-A- 269 111** |
| **CH-A- 354 019** | **CH-A- 447 920** |
| **FR-A- 1 169 998** | **FR-A- 2 111 595** |
| **GB-A- 1 392 618** | **US-A- 4 331 048** |
| **US-A- 4 528 275** | **US-A- 4 532 224** |

**Derwent Abstract Accession NO:
84-085224/14, Class L02, JP,A,59/035061
(DAIDO TOKUSHUKO KK (AKEC-)) 25 February 1984**

(73) Proprietor: **THE COMMONWEALTH SCIENTIFIC AND INDUSTRIAL RESEARCH ORGANIZATION**
**Limestone Avenue, P.O. Box 1600**
**Canberra, Australian Capital Territory**
**2601(AU)**

(72) Inventor: **GARVIE, Ronald, Charles**
**63 Morey Road**
**Beaumaris, VIC 3193(AU)**

(74) Representative: **Collier, Jeremy Austin Grey et al**
**J.A.Kemp & Co. 14, South Square Gray's Inn**
**London WC1R 5EU(GB)**

Derwent Abstract Accession No.
86-200717/31, Class L02, JP,A, 61/132558
(SHOWA DENKO KK) 20 November 1986

Derwent Abstract Accession No.
87-090977/13, Class L02, JP,A, 62/041758
(NGK INSULATORS KK (FUJI-)) 23 February
1987

Derwent Abstract Accession No.
86-187751/29, Class L02, JP,A, 61/122164
(RIKEN CORP) 10 June 1986

Derwent Abstract, Week V33, Class L2, SU,A,
399488 (KARPINOS et al) 15 February 1974

Ceram. Trans. Journal, 83 (1984) p. 196-200

## Description

TECHNICAL FIELD

This invention concerns refractories. More particularly, it concerns composite refractory materials in which an agglomerate of microcrystalline ceramic particles has been dispersed within a matrix of a refractory material to produce a composite refractory material that exhibits good thermal shock resistance, reasonably high mechanical strength and good resistance to corrosion.

BACKGROUND

It is well known that brittle materials cannot be simultaneously dense (which is synonymous with corrosion resistance) and thermal shock resistant. For example, if samples of a dense alumina refractory are heated in a furnace to progressively higher temperatures and then quenched in water to room temperature, and the mechanical strength of the quenched samples is measured, it will be found that at a critical temperature (which varies according to the size of the sample and the conditions under which the experiment is conducted), there is a sudden and significant reduction in the strength retained by the sample after the quenching. In one reported instance, experiments with samples of a dense alumina showed that:

(a) after quenching the sample following heating in a furnace to temperatures of up to (typically) 150°C, the modulus of rupture of the quenched sample remains high (about 230 MPa in a test run conducted by the present inventor); that is, no damage to the sample has resulted from the quenching;

(b) with samples quenched after heating to a furnace temperature of about 150°C, the modulus of rupture of the quenched sample drops dramatically (to about 60 MPa in the test run), showing that the thermal stresses generated during the quench are sufficient to activate pre-existing surface flaws (cracks) in the alumina refractory, so that these flaws propagate catastrophically through the material, causing the sudden loss of strength of the quenched sample; and

(c) when the sample is quenched from temperatures in excess of about 240°C, the strength of the quenched samples falls approximately exponentially, the modulus of rupture reaching a value of about 19 MPa in the test run when the furnace temperature was 400°C.

To overcome the problem of unstable crack propagation in the quenching process, the traditional approach has been to introduce porosity into the refractory material. This reduces the low temperature strength of the refractory but the effect of quenching from higher temperatures is less dramatic. For example, samples of the same alumina material that has been described above which contain 5 per cent porosity had an inherent low temperature strength of about half that of the dense material, the low temperature modulus of rupture being approximately 103 MPa. At the critical temperature of 150°C, quenching reduced the strength of the material with 5 per cent porosity, but the modulus of rupture of the quenched material was about 87 MPa. Quenching samples of this material from a temperature of 400°C produced samples having a modulus of rupture of about 70 MPa.

A refractory brick which is high in alumina content and has a porosity in the range from 15 per cent to 25 per cent completely solves the thermal shock problem. The modulus of rupture of quenched samples of such a material varies substantially linearly from about 19 MPa when the material is quenched from low temperatures to about 17 MPa when it is quenched from a temperature of about 400°C. The strength loss when the material is quenched from higher temperatures is due to stable crack propagation, but the mechanical strength at low temperatures has been sacrificed, being only about one tenth of the strength of a dense commercial alumina ceramic material. An even more serious sacrifice has also occurred: with a porous alumina refractory brick, the rate of slag erosion (corrosion) of the alumina increases exponentially with the increase in porosity.

DISCLOSURE OF THE PRESENT INVENTION

It is an object of the present invention to provide a refractory material which is reasonably strong, is thermal shock resistant and is also corrosion resistant (that is, it is a relatively dense material).

This objective is achieved by creating a composite refractory material which has a matrix of alumina within which are dispersed polycrystalline particles of zirconia (which, incidentally, have a high degree of thermal expansion anisotropy). Such particles are agglomerates of microcrystals (each 1 to 2 micrometers in diameter) which are strongly bonded together. The dispersed polycrystalline particles may occupy from about 1.0 per cent by volume to about 40 per cent by volume of the composite refractory, and the porosity of the composite refractory must not exceed 12 per cent.

Thus, according to the present invention, there is provided an alumina/zirconia composite refractory material comprising an alumina matrix with particles of zirconia dispersed therein, said composite material having a porosity which does not exceed 12 per cent, the composite comprising

(a) a matrix of refractory alumina; and

(b) particles of ceramic zirconia dispersed in the said matrix, the particles occupying from 1.0 per cent by volume to 40 per cent by volume of the composite refractory material, each particle comprising an agglomerate of microcrystals which (i) are strongly bonded together, (ii) exhibit a strong thermal expansion anisotropy, (ii) have a stable morphology at 1600°C and have a size such that cracks do not form spontaneously within the agglomerates during cooling from a temperature of about 1600°C to room temperature; and (iv) have an average diameter in the range from 1 to 2 micrometres.

The preferred concentration of the polycrystalline zirconia agglomerates in the composite refractory material is about 5.6 per cent by volume.

The present invention also encompasses a method of making such a composite refractory material, comprising the steps of

(a) mixing together a powder of alumina matrix material, a powder of the polycrystalline zirconia material to be dispersed within the matrix material, and a fugitive binder;

(b) allowing the mixture to dry;

(c) granulating the dried powder mixture;

(d) preforming the granulated powder into billets by die pressing;

(e) isostatically pressing the die pressed billets to form green billets for sintering;

(f) heating the green billets at a predetermined rate until a sintering temperature in the range from 1200°C to 1800°C is reached;

(g) holding the green billets at a sintering temperature for a period in the range from 0 to 5 hours; and

(h) furnace cooling the sintered billets to ambient temperature.

The smaller the grain size of the matrix material, the lower the sintering temperature. The preferred period of hold at the sintering temperature is about 1 hour.

Examples of composite refractory materials made in accordance with the present invention will now be described, by way of example only, with reference to the accompanying drawings.

## BRIEF DESCRIPTION OF THE DRAWINGS

Figure 1 is a graph showing the variation of the thermal shock resistance of samples of alumina and of alumina based composite refractory materials as the amount of particulate agglomerate zirconia dispersed therein is varied.

Figure 2 is a graph showing thermal shock data for three materials.

## DETAILED DESCRIPTION OF EMBODIMENTS

The matrix phase of the composite material of the present invention has to have a particle size which is consistent with sintering to a high density at the firing temperature of the refractory material. Thus when oxide ceramics are used as the matrix refractory material, the mean particle size of the matrix material will be in the range from 0.1 to 5.0 micrometers, with a preferred value of about 1.0 micrometer. The purity of the matrix material is preferably such that the alumina contains an insignificant amount of low melting point glassy phases.

Some samples of a composite alumina refractory material which contained polycrystalline agglomerates of microcrystalline zirconia particles were produced and the performance of such material was compared with the performance of (a) samples of an alumina material fabricated using the same technique but with no particles of polycrystalline material added, and (b) samples of a similar alumina material containing single crystals of zirconia (also made using the same technique). For the alumina/zirconia compositions containing particles of polycrystalline zirconia, manufactured agglomerates of a commercial product marketed as "MEL-S" (trade mark) zirconia powder by Magnesium Elektron Co. Ltd were used as the dispersed phase of the composite refractory. These commercial polycrystalline particles had a mean particle size of about 13 micrometers; each particle comprised bonded microcrystals having an average diameter in the range from 1 to 2 micrometers.

For the other alumina/zirconia composition, natural baddelyite was used as the dispersed phase. The mean particle size of the baddelyite single crystals was about 9 micrometers; that is, the size was similar to the agglomerate size of the "MEL-S" powder. The morphology of the polycrystalline "MEL-S" oxide was confirmed to be stable by heating the oxide to 1600°C (the fabrication temperature of the composite refractory material). No change in the powder was observed with such heating.

To make the sample materials, a pure alumina powder (Reynold's RC 172 DBM alumina) was used. The composition of this powder is given in Table 1 below, together with the compositions of the "MEL-S" and baddelyite materials used.

TABLE 1

| Analyses of the Oxide Powders | | | |
|---|---|---|---|
| Component Oxide | RC-172 DBM | MEL-S | BADDELYITE |
| $Al_2O_3$ | 99.7 | 0.30 | 0.20 |
| $Na_2O$ | 0.060 | - | 0.10 |
| $SiO_2$ | 0.080 | 0.30 | 0.50 |
| $Fe_2O_3$ | 0.030 | 0.10 | 0.20 |
| MgO | 0.056 | - | 0.20 |
| $TiO_2$ | - | 0.20 | 0.18 |
| Note: MgO is added to alumina as a sintering aid. | | | |

Impurities in the alumina are tolerated. However, if the product composite refractory material is to be used in contact with slags or molten glass (in which cases, corrosion could be expected), there should be no significant amount of low melting point glassy phases, or phases which react with the zirconia particles, in the alumina.

The sample materials were made, with various zirconia contents, using the following steps:

a) the alumina and zirconia powders were mixed together with a fugitive binder in an inert liquid medium (water, in this instance);

b) the mixture of powders was dried by evaporation of the liquid medium at room temperature;

c) the dried powder mixture was granulated by passing it through a 20-mesh (B.S.S.) screen, then through a 50-mesh (B.S.S.) screen;

d) the granulated powder was preformed, by die pressing, into billets;

e) the billets were isostatically pressed at a pressure of about 210 MPa;

f) the green pressed billets were heated to a temperature of 1600°C at a rate of 100°C per hour;

g) the heated billets were held at the sintering temperature of 1600°C for one hour;

h) the sintered billets were furnace cooled to ambient temperature.

Steps (f) and (g) may be modified according to the composition of the composite refractory material being produced and the ability of the furnace to heat up at a predetermined rate. In general, the larger the size of the grains of the matrix material, the higher the sintering temperature. Matrix materials having a sub-micron grain size can be sintered at a temperature as low as 1200°C. Normally, 1800°C will be the maximum sintering temperature. Similarly, the hold period at the sintering temperature may be varied, with 5 hours being the maximum hold time if coarse grained matrix material is used. If fine grained matrix material is used, satisfactory product material is achieved simply by heating to the sintering temperature, then switching the furnace off.

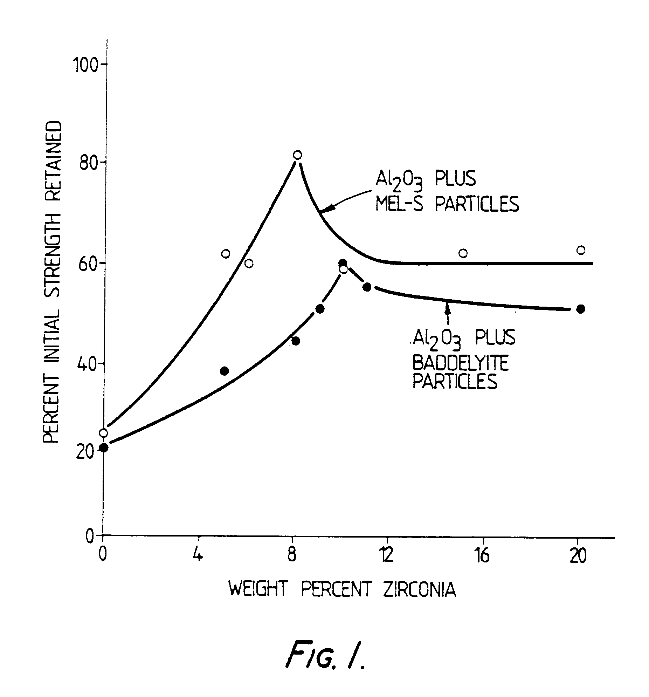

To provide test samples of the materials, the billets were ground until they had dimensions 3 mm x 3 mm x 40 mm. Samples from each batch of billets were then given a thermal shock resistance test by heating the billets to 1000°C and quenching the heated billets in water to room temperature. The percentage of the original strength (modulus of rupture) which was retained by the quenched sample was then measured. The results of this testing are presented in graphical form in Figure 1.

As will be seen from Figure 1, the composite refractory materials which retained most of their original strength were those containing 8 per cent (by weight) of the "MEL-S" material and 10 per cent (by weight) of the baddelyite powder. The batches of material containing these amounts of zirconia were designated AS8 and AB10, respectively. It is interesting to note that the AS8 material retained 84.6 per cent of its original strength, whereas the AB10 material retained 63.0 per cent of its original strength - a significantly lower percentage. The AS8 material had a porosity of 4.0 per cent.

It will also be seen from Figure 1 that good retention of original strength is exhibited by the samples containing from about 6 per cent by weight to 20 per cent by weight of the MEL-S zirconia dispersed phase.

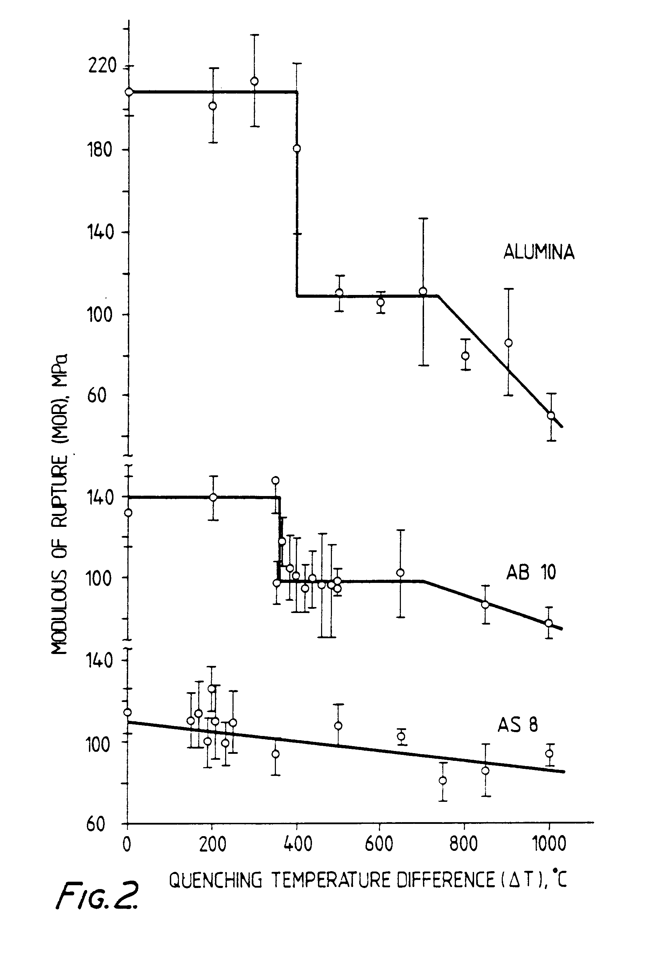

More detailed thermal shock testing was then carried out using sample billets of the AS8, AB10 and alumina materials. The variation of the retained strength of these materials as the quenching temperature

EP 0 318 489 B1

difference increases is shown in Figure 2.

As will be seen from Figure 2, the alumina samples had the typical thermal shock behaviour of dense ceramic materials, the sudden drop in retained strength occurring with a quenching temperature difference of 400°C. The AB10 material performed in a similar manner, except that the decrease in strength at 400°C was less than the decrease in strength at this temperature exhibited by the alumina samples. The behaviour of the AS8 material indicates that only stable crack propagation occurs with this material. Note, however, that its retained modulus of rupture is quite high, being close to 115 MPa at low quenching temperature differences (compared with about 19 MPa for a typical alumina refractory brick).

Experiments in which samples of AS8 were annealed at 1100°C for four hours to remove any residual transformational strains which could generate a toughening mechanism showed that the zirconia particles are still monoclinic at this temperature. Thermal shock testing of these annealed samples showed that the transformation from tetragonal zirconia to monoclinic zirconia is only partly, and in a minor way, involved in the enhanced thermal shock resistance of the AS8 material. The present inventor believes (this has yet to be confirmed) that the properties of the AS8 material are due, in part, to the combination of the particle morphology (the agglomerates of microcrystals) and the severe thermal expansion anisotropy of the monoclinic structure of the zirconia particles. The highly strained agglomerates interact with the thermal stresses generated during the thermal shock, thereby creating a localised dense network of microcracks. Such networks would constitute a toughening mechanism which results in stable crack propagation in dense materials.

This explanation is in accordance with the general understanding that the difference in the behaviour of ceramics and refractories is due to crack propagation differences in these materials. When a ceramic material is subjected to thermal shock and a crack is initiated, it propagates catastrophically (unstably) through the material because the energy to drive a crack through the ceramic material is close to the energy required to initiate the crack. In a refractory material, considerably more energy is required to drive a crack through the material than is needed to create the crack. Thus, when a refractory is subjected to thermal shock, many cracks are initiated but none is propagated over any harmful distance, so the material survives the thermal shock with little change in its strength.

Those skilled in this art will recognise that the material AS8 is a dense ceramic material that behaves in the manner of a refractory brick.

The composite refractory material comprising alumina with zirconia agglomerates distributed therein is particularly useful for the manufacture of pouring nozzles and sliding gates for the continuous casting of steel. Another use for this material is the monolith support for catalytic converters of the type now required to be fitted to the engines of all new petrol-powered automobiles in Australia. At present, this monolith support is made like a refractory brick, with up to 40 per cent open porosity. Using the composite refractory material of the present invention, the cell walls of the honeycomb can be made strong and thin, with only surface porosity to absorb the catalyst wash coat. This type of structure enables more cells per square centimetre to be created and reduces the back pressure on the engine, thus creating a more efficient engine.

## Claims

1.  A composite refractory material having a porosity which does not exceed 12 per cent, the composite refractory material comprising
    (a) a matrix of refractory alumina; and
    (b) particles of ceramic zirconia dispersed in the said matrix, the particles occupying from 1.0 per cent by volume to 40 per cent by volume of the composite refractory material, each particle comprising an agglomerate of microcrystals which (i) are strongly bonded together, (ii) exhibit a strong thermal expansion anisotropy, (ii) have a stable morphology at 1600°C and have a size such that cracks do not form spontaneously within the agglomerates during cooling from a temperature of about 1600°C to room temperature; and (iv) have an average diameter in the range from 1 to 2 micrometres.

2.  A composite refractory material as defined in claim 1, in which the dispersed zirconia particles comprise from 6 per cent to 20 per cent by weight of the composite refractory material.

3.  A composite refractory material as defined in claim 1, in which the dispersed zirconia particles comprise about 5.6 per cent by volume of the composite refractory material.

4. A composite refractory material as defined in claim 1, claim 2 or claim 3, further characterised in that the alumina matrix phase has a mean particle size in the range from 0.1 micrometre to 5.0 micrometres.

5. A composite refractory material as defined in claim 4 in which the alumina matrix phase has a mean particle size of about 1.0 micrometre.

6. A composite refractory material as defined in any preceding claim, in which the alumina matrix material contains an insignificant amount of low melting point glassy phases.

7. A method of making a composite refractory material as defined in claim 1 comprising the steps of
(a) mixing together a powder of the alumina matrix material, a powder of the polycrystalline zirconia material to be dispersed within the matrix material, and a fugitive binder;
(b) allowing the mixture to dry;
(c) granulating the dried powder mixture;
(d) preforming the granulated powder into billets by die pressing;
(e) isostatically pressing the die pressed billets to form green billets for sintering;
(f) heating the green billets at a predetermined rate until a sintering temperature in the range from 1200°C to 1800°C is reached;
(g) holding the green billets at the sintering temperature for a period in the range from 0 to 5 hours; and
(h) furnace cooling the sintered billets to ambient temperature.

8. A method as defined in claim 7 in which the period of hold at the sintering temperature is about 1 hour.

9. A method as defined in claim 7, in which the predetermined heating rate is 100°C per hour, the sintering temperature is 1600°C, and the period of hold at the sintering temperature is one hour.

**Patentansprüche**

1. Feuerfestes Verbundmaterial mit einer Porosität von nicht mehr als 12%, wobei das feuerfeste Verbundmaterial
(a) eine Matrix feuerfesten Aluminiumoxids und
(b) in der Matrix dispergierte Teilchen von keramischem Zirkonoxid, wobei die Teilchen 1,0 bis 40 Vol.-% des feuerfesten Verbundmaterials einnehmen und jedes Teilchen aus einem Agglomerat von Mikrokristallen besteht, die (1.) fest aneinander gebunden sind, (2.) eine deutliche thermische Ausdehnungsanisotropie aufweisen, (3.) bei 1600°C eine stabile Morphologie und eine Größe besitzen, so daß während eines Abkühlens von einer Temperatur von etwa 1600° auf Raumtemperatur in den Agglomeraten spontan keine Risse gebildet werden, und (4.) einen durchschnittlichen Durchmesser im Bereich von 1 bis 2 $\mu$m aufweisen,
umfaßt.

2. Feuerfestes Verbundmaterial nach Anspruch 1, worin die dispergierten Zirkonoxidteilchen 6 bis 20 Gew.-% des feuerfesten Verbundmaterials ausmachen.

3. Feuerfestes Verbundmaterial nach Anspruch 1, worin die dispergierten Zirkonoxidteilchen etwa 5,6 Vol.-% des feuerfesten Verbundmaterials ausmachen.

4. Feuerfestes Verbundmaterial nach Anspruch 1, Anspruch 2 oder Anspruch 3, ferner dadurch gekennzeichnet, daß die Aluminiumoxidmatrixphase eine mittlere Teilchengröße im Bereich von 0,1 bis 5,0 $\mu$m besitzt.

5. Feuerfestes Verbundmaterial nach Anspruch 4, worin die Aluminiumoxidmatrixphase eine durchschnittliche Teilchengröße von etwa 1,0 $\mu$m besitzt.

6. Feuerfestes Verbundmaterial nach einem der vorhergehenden Ansprüche, worin das Aluminiumoxidmatrixmaterial eine geringfügige Menge von Glasphasen mit niedrigem Schmelzpunkt enthält.

# EP 0 318 489 B1

**7.** Verfahren zur Herstellung eines feuerfesten Verbundmaterials nach Anspruch 1, umfassend die folgenden Schritte:

(a) gemeinsames Vermischen eines Pulvers des Aluminiumoxidmatrixmaterials mit einem Pulver des in dem Matrixmaterial zu dispergierenden polykristallinen Zirkonoxidmaterials und einem flüchtigen Bindemittel;

(b) Trocknenlassen des Gemisches;

(c) Granulieren des getrockneten Pulvergemisches;

(d) Vorformen des granulierten Pulvers zu Blöcken durch Formpressen;

(e) isostatisches Verpressen der formgepreßten Blöcke unter Bildung grüner Blöcke zum Sintern;

(f) Erhitzen der grünen Blöcke mit einer vorbestimmten (Aufheiz-)Geschwindigkeit bis zum Erreichen einer Sintertemperatur im Bereich von 1200 bis 1800°C;

(g) Halten der grünen Blöcke bei der Sintertemperatur für eine Zeitdauer im Bereich von 0 bis 5 Stunden und

(h) Ofenkühlen der gesinterten Blöcke auf Umgebungstemperatur.

**8.** Verfahren nach Anspruch 7, worin die Zeitdauer des Haltens bei der Sintertemperatur etwa 1 Stunde beträgt.

**9.** Verfahren nach Anspruch 7, worin die vorbestimmte Aufheizgeschwindigkeit 100°C/h, die Sintertemperatur 1600°C und die Zeitdauer des Haltens bei der Sintertemperatur 1 Stunde betragen.

## Revendications

**1.** Matière réfractaire composite ayant une porosité qui n'excède pas 12 %, la matière réfractaire composite comprenant :

(a) une matrice d'alumine réfractaire; et

(b) des particules de zircone céramique dispersées dans ladite matrice, les particules occupant de 1,0 % en volume à 40 % en volume de la matière réfractaire composite, chaque particule comprenant un aggloméré de microcristaux qui (i) sont fortement liés ensemble, (ii) montrent une forte anisotropie de dilatation thermique, (iii) ont une morphologie stable à 1600°C et ont une taille telle que des fissures ne se forment pas spontanément dans les agglomérés au cours d'un refroidissement d'une température d'environ 1600°C à la température ambiante et (iv) ont un diamètre moyen allant de 1 à 2 micromètres.

**2.** Matière réfractaire composite suivant la revendication 1, caractérisée en ce que les particules de zircone dispersées constituent de 6 % à 20 % en poids de la matière réfractaire composite.

**3.** Matière réfractaire composite suivant la revendication 1, caractérisée en ce que les particules de zircone dispersées constituent environ 5,6 % en volume de la matière réfractaire composite.

**4.** Matière réfractaire composite suivant la revendication 1, la revendication 2 ou la revendication 3, caractérisée en outre en ce que la phase de matrice d'alumine a une taille de particule moyenne allant de 0,1 micromètre à 5,0 micromètres.

**5.** Matière réfractaire composite suivant la revendication 4, caractérisée en ce que la phase de matrice d'alumine a une taille de particule moyenne d'environ 1,0 micromètre.

**6.** Matière réfractaire composite suivant l'une quelconque des revendications précédentes, caractérisée en ce que la matière de matrice d'alumine contient une quantité insignifiante de phases vitreuses de bas point de fusion.

**7.** Procédé de fabrication d'une matière réfractaire composite telle que définie à la revendication 1, comprenant les étapes suivantes :

(a) mélanger une poudre de la matière de matrice d'alumine, une poudre de la matière de zircone polycristalline à disperser dans la matière de matrice et un liant volatil;

(b) laisser le mélange sécher;

(c) granuler le mélange pulvérulent séché;

(d) préformer la poudre granulée en billettes par formage à la presse;

8

(e) presser isostatiquement les billettes formées à la presse pour former des billettes brutes pour le frittage;

(f) chauffer les billettes brutes à une vitesse prédéterminée jusqu'à ce qu'une température de frittage allant de 1200°C à 1800°C soit atteinte;

(g) maintenir les billettes brutes à la température de frittage pendant une période allant de 0 à 5 heures; et

(h) refroidir au four les billettes frittées jusqu'à la température ambiante.

8.  Procédé suivant la revendication 7, caractérisé en ce que la période de maintien à la température de frittage est d'environ 1 heure.

9.  Procédé suivant la revendication 7, caractérisé en ce que la vitesse de chauffage prédéterminée est de 100°C par heure, la température de frittage est de 1600°C et la période de maintien à la température de frittage est d'une heure.

FIG. 1.

FIG. 2.